# EUROPÄISCHE PATENTSCHRIFT

(11) **EP 2 692 416 B1**
(45) Veröffentlichungstag und Bekanntmachung des Hinweises auf die Patenterteilung: **11.01.2017**
(21) Anmeldenummer: 13175856.7
(22) Anmeldetag: 10.07.2013
(51) Int. Cl.: B01D 53/26, F25B 6/04, F25B 9/00, F25B 49/02

(54) **Kältetrockner**
Refrigerant type dryer
Dispositif de séchage à froid

(30) Priorität: 31.07.2012 DE 102012106992; 26.10.2012 DE 102012110237
(43) Veröffentlichungstag der Anmeldung: 05.02.2014
(73) Patentinhaber: Dürr thermea GmbH, 01458 Ottendorf-Okrilla (DE)
(72) Erfinder: Brauer, Lars, 01097 Dresden (DE); Dr. Nestler, Walter, 01689 Weinböhla (DE); Oberländer, Steffen, 01705 Freital (DE); Wobst, Prof. Eberhard, 01156 Dresden (DE)
(74) Vertreter: Kaufmann, Sigfrid

(56) Entgegenhaltungen:
- US-A- 5 099 655
- US-A- 5 937 660
- US-A1- 2005 086 827
- US-A1- 2009 205 355

## Beschreibung

Die Erfindung betrifft einen Kältetrockner, der mit einem natürlichen Kältemittel betrieben wird und mit dem hohe COP-Werte (Coefficient of Performance) erreicht werden. Der Kältetrockner ist besonders zum Trocknen von Druckluft, z. B. in Industrieanlagen, geeignet.

In vielen Industriebereichen, wie z. B. in der Automobilindustrie, werden mit Druckluft betriebene Werkzeuge und Vorrichtungen eingesetzt. Zur Erzeugung der Druckluft wird Luft in Verdichtern komprimiert. Aufgrund der Druckerhöhung verringert sich das Aufnahmevermögen der Luft für Wasserdampf. Um bei der Verwendung der Druckluft das Auskondensieren von Wasser durch Temperaturabsenkung im Druckluftverteilnetz oder bei der Entspannung in einem Werkzeug oder in der zu betreibenden Vorrichtung zu vermeiden, muss die Druckluft getrocknet werden. Das ohne Trocknung ausfallende Kondenswasser kann einerseits Korrosion im Druckluftsystem verursachen, anderseits können aufgrund von Eisbildung bei einer Druckabsenkung und/oder bei niedrigen Umgebungstemperaturen Ausfälle von Werkzeugen oder Komponenten des Druckluftsystems auftreten.

Um dies zu vermeiden, wird die Druckluft auf einen vorgegebenen Drucktaupunkt, z. B. 3°C, getrocknet. Im Folgenden soll ausschließlich auf Kältetrockner eingegangen werden, die nach dem Prinzip "Kondensieren von Wasser aus der Luft an kalten Flächen" arbeiten (sog. Kondenstrockner).

Bei den bekannten Kältetrocknern (z. B. DE 10 2010 033 187 A1, WO 2011/128317 A1 und DE 10 2004 056 483 A1) ist die kalte Fläche eine Verdampfer- oder Kühleroberfläche, wobei der Verdampfer/Kühler in eine Kältemaschine (Kältetrockner) eingebunden ist. Zur Verbesserung des Prozesses wird ein Luft-Luft-Wärmetauscher vorgeschaltet, in dem die vom Luftverdichter kommende, feuchte und warme Luft vorgekühlt und vorentfeuchtet wird. Die Wärme wird dabei auf die getrocknete, kalte Luft übertragen. Als Kältemittel werden üblicherweise HFKWs, wie z. B. R134a, oder noch HFCKWs, z. B. R22, verwendet.

HFKWs und HFCKWs sind keine natürlichen Kältemittel, d. h., sie sind nicht umweltneutral; HFCKWs sind zudem ozonschädlich. Kältemaschinen, die mit dem weniger schädlichen Kohlendioxid als Kältemittel arbeiten, sind aus US 2009/205355 A1 und US 5 937 660 A bekannt; Kältetrockner mit Kohlendioxid als Kältemittel sind in US 2005/086827 A1 und US 5 099 655 A beschrieben.

Der Erfindung liegt die Aufgabe zugrunde, einen mit einem natürlichen Kältemittel betriebenen Kältetrockner bereitzustellen, mit dem hohe COP-Werte erreichbar sind und mit dem bei Bedarf eine teilweise oder vollständige Wärmerückgewinnung auf hohem Temperaturniveau möglich ist.

Die Aufgabe der Erfindung wird durch die kennzeichnenden Merkmale des Anspruchs 1 gelöst. Weitere vorteilhafte Ausführungen der Erfindung ergeben sich aus den Ansprüchen 2 bis 8.

Ausgegangen wird von einem Kältetrockner zum Entfeuchten von Luft mittels einer Kaltdampfkältemaschine (Kondenstrockner). Der Kältetrockner weist (mindestens) einen Verdichter, (mindestens) einen Gaskühler oder Verflüssiger, (mindestens) einen Verdampfer, der dazu eingerichtet ist, ein an seiner einen Seite vorbeigeführtes Medium, z. B. Luft, zu entfeuchten, (mindestens) ein Expansionsventil und für den Fall der Wärmerückgewinnung (mindestens) einen inneren Wärmetauscher auf, der zwischen die Saugseite des Verdichters und den Eintritt des Expansionsventils geschaltet ist (d. h. der zur Wärmeübertragung zwischen dem Kältemittel an der Saugseite des Verdichters und dem Kältemittel vor dem Eintritt des Expansionsventils dient).

Die Komponenten des Kältetrockners können, abhängig von den Leistungsanforderungen, auch aus mehreren parallel und/oder seriell kaskadierten Einzelkomponenten zusammengesetzt sein. Im Folgenden soll jedoch, der Einfachheit halber, immer von einzelnen Komponenten die Rede sein, d. h. das "mindestens" entfällt im Folgenden. Nach Maßgabe der Erfindung arbeitet der Kältetrockner mit Kohlendioxid (CO₂) als Kältemittel.

Der erfindungsgemäße Kältetrockner weist drei weitere signifikante Unterschiede zu den herkömmlichen Trocknern mit HFKW- und HFCKW-Kältemitteln auf.

Erstens wird in Abhängigkeit von der Kühlwassertemperatur (am Gaskühler oder Verflüssiger) der erfindungsgemäße Kältetrockner hochdruckseitig unter- oder überkritisch betrieben, wohingegen herkömmliche Kältetrockner hochdruckseitig ausschließlich unterkritisch betrieben werden.

Zweitens liegen die Arbeitsdrücke beim erfindungsgemäßen Kältetrockner um den Faktor 2 bis 5 höher als bei den konventionellen Kältetrocknern, die auf der Niederdruckseite 10 bar und auf der Hochdruckseite 40 bar nicht überschreiten.

Drittens umfasst der erfindungsgemäße Kältetrockner einen Kältemittelsammler, der parallel zum Expansionsventil geschaltet ist und der mindestens einen Eintritt und einen Austritt aufweist, wobei der Zufluss von Kältemittel in den Kältemittelsammler und der Abfluss von Kältemittel aus dem Kältemittelsammler automatisch gesteuert werden kann. Auf den in herkömmlichen Kältetrocknern ständig mit Kältemittel durchströmten, konventionellen Kältemittelsammler wird verzichtet.

Das Kältemittel im Kältemittelsammler des erfindungsgemäßen Kältetrockners wird, was in ständig durchströmten, konventionellen Kältemittelsammlern nicht möglich ist, immer unterhalb des kritischen Punktes gehalten, wodurch ein Dichteunterschied zwischen flüssigem und gasförmigem Kohlendioxid erreicht wird und damit eine hohe Speicherwirkung das Kältemittelsammlers gewährleistet ist, die mit sinkender Temperatur und damit zunehmenden Abstand vom kritischen Punkt immer größer wird.

Der Vorteil dieser Schaltung wirkt sich insbesondere bei der hochdruckseitig transkritischen Prozessführung positiv aus, da unabhängig vom Betriebspunkt, vor allem bei sich in Abhängigkeit von der Wärmerückgewinnungs- und oder Rückkühlsituation ändernden Betriebspunkten, die optimale Kältemittelfüllmenge automatisch eingestellt wird.

Ein weiterer Vorteil dieser Schaltung besteht darin, dass bei der Auswahl der das innere Volumen bestimmenden Komponenten (Wärmetauscher, Ölabscheider, Rohre...) mehr Freiheitsgrade bezüglich des inneren Volumens dieser Komponenten bestehen.

Damit ergibt sich der weitere Vorteil, dass das innere Volumen des Kältemittelkreislaufs so ausgelegt werden kann, dass der zulässige Stillstandsdruck der Anlage in praxisrelevanten Temperaturbedingungen, z. B. in Maschinenräumen mit Temperaturen bis zu 60°C, nicht überschritten wird und damit keine unter Druck stehenden Sicherheitsabblaseleitungen ins Freie erforderlich sind oder Sicherheitsabblaseleitungen sogar ganz entfallen können

So kann bei der Verwendung von Überströmventilen zum Druckausgleich zwischen Hoch- und Niederdruckseite auf Sicherheitsabblaseleitungen und gegebenenfalls auch auf Sicherheitsventile vollständig verzichtet werden, da der Kältekreis eigensicher ist.

Um sicherzustellen, dass beim Betrieb des Kältetrockners die Temperatur des Kältemittels im Kältemittelsammler immer tief genug (unterhalb des kritischen Punktes) bleibt, kann der Kältemittelsammler mit einer Einrichtung zur Kühlung des Kältemittels ausgestattet werden (aktive Kühlung). Zudem kann der Kältemittelsammler eine Einrichtung zur Beheizung des Kältemittels aufweisen. So kann durch Beheizen des Kältemittels eine Druckerhöhung im Kältemittelsammler bewirkt werden, wodurch die Rückspeisung von Kältemittel in den Kältemittelkreislauf beschleunigt wird, und entsprechend durch Kühlen des Kältemittels (Druckabsenkung) eine schnelle Entnahme des Kältemittels aus dem Kältemittelkreislauf erreicht werden.

Die Temperierung des Kältemittelssammlers kann, abhängig von Einsatzgebiet, auf verschiedene Weise erfolgen, z. B. mittels einer Wärmesenke/Wärmequelle, durch Beheizen und Kühlen mithilfe des Kältemittels des Kältetrockners oder durch die Verwendung einer Heizmatte/eines Fremdkühlsatzes.

Der Kältemittelsammler kann auf verschiedene Art realisiert sein, z. B. als Sammler mit nur einer Heizmatte und einer thermischen Isolierung, als Sammler mit einer Luftkühlung, als Sammler umgeben von einer Rohrschlange (oder mit mindestens einer integrierten Rohrschlange), die gleichzeitig zum Heizen und Kühlen dient, als Sammler mit einer Heizmatte, der mit einer Rohrschlange zum Kühlen (Kältemittel, Fremdkühlsatz, Verwendung der Abwärme als Wärmequelle) versehen ist, oder als Sammler, der als Rohrbündelwärmetauscher ausgeformt ist, wobei das Kältemittel im Mantelraum und das Temperiermedium in den Rohren geführt wird. Denkbar ist auch ein Einsatz von zwei getrennten Rohrbündeln, die jeweils zum Heizen und Kühlen genutzt werden.

Zur Steuerung des Kältemittelsammlers des erfindungsgemäßen Kältetrockners sind üblicherweise vor dem Eintritt und hinter dem Austritt des Kältemittelsammlers elektrisch zu betätigende Ventile, z. B. Motorregelventile oder Magnetventile, angebracht, mittels derer (mithilfe einer geeigneten Steuerung) sowohl der Zufluss von Kältemittel in den Kältemittelsammler als auch der Abfluss von Kältemittel aus dem Kältemittelsammler bei hochdruckseitig transkritischem Betrieb in Abhängigkeit vom Druck des Kältemittels auf der Hochdruckseite geregelt werden. Bei hochdruckseitig unterkritischem Betrieb wird die Kältemittelunterkühlung am Austritt des Gaskühlers, der in dem Fall als Verflüssiger arbeitet, als Regelgröße genutzt.

Bei hochdruckseitig transkritischem Betrieb öffnet das Regelventil vor dem Kältemittelsammler bei steigendem Hochdruck, wodurch, da der Hochdruck höher als der Druck im Kältemittelsammler ist, Kältemittel aus dem Kreislauf in den Kältemittelsammler strömt. Der Vorgang kann zusätzlich noch durch eine Kühlung des Kältemittelsammlers (des Kältemittels im Kältemittelsammler) unterstützt werden.

Bei sinkendem Hochdruck öffnet das Regelventil hinter dem Kältemittelsammler, wodurch, da der Saugdruck niedriger als der Druck im Kältemittelsammler ist, Kältemittel in den Kreislauf zurückströmen kann. Der Vorgang kann durch Beheizen des Kältemittelsammlers (des Kältemittels im Kältemittelsammler) unterstützt werden.

Bei hochdruckseitig unterkritischem Betrieb wird bei zu geringer Unterkühlung des Kältemittels am Verflüssigeraustritt Kältemittel wie zuvor beschrieben aus dem Sammler in den Kältemittelkreislauf, bei zu hoher Unterkühlung aus dem Kreislauf in den Sammler gefördert.

Zudem ist es vorgesehen, den Kältetrockner mit einer Steuerung auszustatten, die es ermöglicht, den Kältetrockner, abhängig von den Rückkühlbedingungen, automatisch zwischen der hochdruckseitig unter- oder überkritischen Betriebsweise zu steuern.

Im Kältetrockner kann als Verdichter ein Hubkolben-, Schrauben-, Scroll- oder Turboverdichter eingesetzt sein.

Zur Verbesserung des Prozesses im Falle einer Wärmerückgewinnung kann der erfindungsgemäße Kältetrockner, gegebenenfalls zusätzlich zum inneren Wärmetauscher, einen Luft-Kältemittel-Wärmetauscher aufweisen, dessen luftseitiger Eintritt an den Austritt desjenigen Teils des Luft-Luft-Wärmetauschers angeschlossen ist, der mit der zu trocknenden Luft durchströmt ist, und dessen luftseitiger Austritt mit dem luftseitigen Eintritt des Verdampfers verbunden ist. Kältemittelseitig ist der Luft-Kältemittel-Wärmetauscher zwischen den Austritt des inneren Wärmetauschers und die Saugseite des Verdichters geschaltet. Der Wärmetauscher hebt die Verdichtereintrittstemperatur und damit auch die Verdichteraustrittstemperatur an.

Alternativ kann zur Vorerwärmung der Luft statt des Luft-Luft Wärmetauschers auch eine externe Wärmequelle (z. B. bereits vorhandenes, warmes Prozessabwasser) genutzt werden. Die Nutzung von warmem Wasser hätte den Vorteil, dass ein kleinerer und kostengünstigerer Wärmetauscher (als der Luft-Luft-Wärmetauscher) eingesetzt werden kann.

Zur weiteren Verbesserung des Prozesses kann anstelle des Expansionsventils auch ein Ejektor zur arbeitsleistenden Entspannung eingesetzt werden.

Um die Servicefreundlichkeit zu erhöhen, können alle diejenigen Seiten der Wärmetauscher des Kältetrockners, die beim Betrieb (des Kältetrockners) mit Luft oder mit Wasser beaufschlagt werden, wie z. B. der Verdampfer, der Kondensator und gegebenenfalls der Luft-Kältemittel-Wärmetauscher (jedoch nicht: der innere Wärmetauscher), derart konstruiert sein, dass sie unkompliziert gereinigt werden können.

In einer vorteilhaften Variante des erfindungsgemäßen Kältetrockners wird durch Kühlung des transkritisch vorliegenden Druckgases auf möglichst niedrige Werte Wärme zurückgewonnen. Hierzu wird der Kältetrockner mit mindestens einem Wärmetauscher auf der Hochdruckseite ausgestattet, dessen Wärme an einen Wärmeverbraucher (der nicht dem Zweck der Wärmeabführung an die Umwelt dient) abgegeben werden kann. Im einfachsten Fall wird der Wärmeverbraucher direkt oder indirekt über einen Zwischenkreis oder Sicherheitswärmetauscher an den Gaskühler angeschlossen. Es können jedoch auch mehrere in Reihe und/oder parallel geschaltete Wärmetauscher/Gaskühler eingesetzt werden, die Wärme auf verschiedenen Temperaturniveaus zurückgewinnen können. Findet nur eine teilweise Wärmerückgewinnung statt, kann zusätzlich ein Kühlturm oder eine andere geeignete Rückkühleinrichtung erforderlich sein.

Ein ständig durchströmter, konventioneller (kein überfluteter Verdampfer) Kältemittelsammler in Kombination mit einem Hochdruckregelventil nach dem Stand der Technik bei CO₂-Kälteanlagen kann nur dann sinnvoll eingesetzt werden, wenn sich die Betriebsbedingungen der entsprechenden Anwendung und damit auch die erforderliche CO₂-Füllung lediglich in engen Grenzen ändern, denn aufgrund des vergleichsweise geringen Unterschieds zwischen der Dichte von flüssigem und dampfförmigem Kohlendioxid in der Nähe des kritischen Punkts, hat der ständig durchströmte, konventionelle Kältemittelsammler, zwar eine sehr geringe, aber unter dieser Voraussetzung ausreichende Speicherkapazität. Dies gilt insbesondere für Ausführungsvarianten mit Rohrbündel-Gaskühlern/Verflüssigern und mit Schraubenverdichteranlagen.

Falls der Wärmebedarf auf hohem Temperaturniveau mit der beschriebenen Trocknerausführung nicht gedeckt wird, kann der Luft-Luft-Wärmetauscher weggelassen werden. Der Trockner ist dann für die gesamte Kühl- und Entfeuchtungsleistung der Druckluft ausgelegt. Die Nachheizung der getrockneten Druckluft erfolgt in einem zusätzlichen Wärmetauscher, der auf der Hochdruckseite den Gaskühlern nachgeschaltet ist. Ein hochdruckseitig unterkritischer Betrieb ist in diesem Fall ausgeschlossen und tritt nur kurzzeitig beim Anfahren des Trockners auf.

Die Erfindung wird nachfolgend anhand von Ausführungsbeispielen näher erläutert; hierzu zeigen:
- Fig. 1:: Kältetrockner (Stand der Technik),
- Fig. 2:: Kältetrockner (Stand der Technik, mit durchströmtem Kältemittelsammler),
- Fig. 3:: Kältetrockner mit Kohlendioxid als Kältemittel,
- Fig. 4:: Kältetrockner mit Kohlendioxid als Kältemittel und mit Wärmenutzung,
- Fig. 5:: Kältetrockner mit Kohlendioxid als Kältemittel für eine maximale Wärmerückgewinnung auf hohem Temperaturniveau

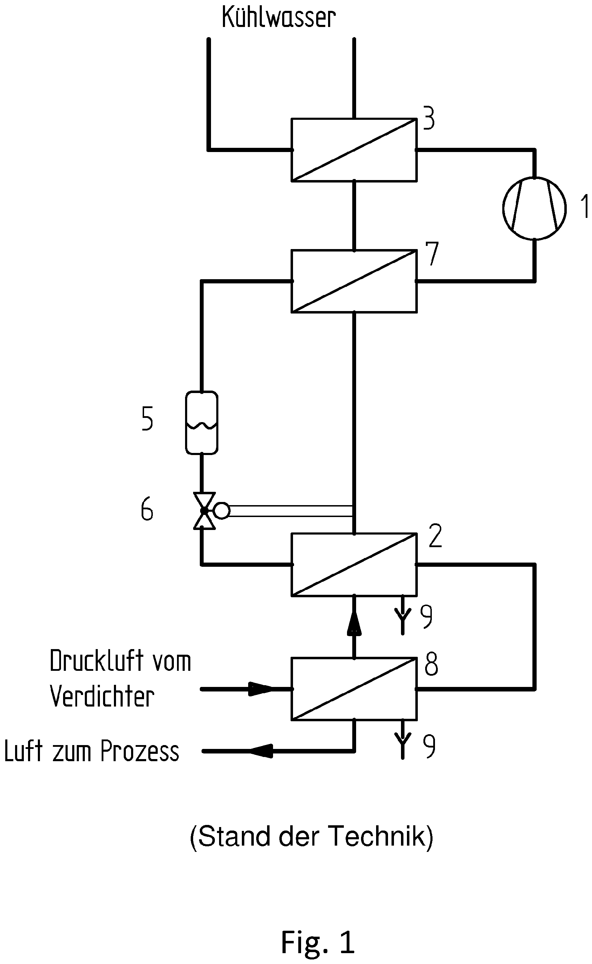

Bei dem in Fig. 1 dargestellten Kältetrockner mit FKW- oder HFCKW- Kältemitteln saugt der Verdichter 1 Kältemittel aus dem Verdampfer 2 und verdichtet es auf Hochdruckniveau; dabei steigt auch die Temperatur des Kältemittels. Im nachgeschalteten Verflüssiger 3 wird das Kältemittel im unterkritischen Zustand bei nahezu konstantem Druck und nahezu konstanter Temperatur verflüssigt, wobei die Wärme an das Sekundärmedium (z. B. Kühlwasser) des Kreislaufs übergeben wird. Über den Sammler 5 und das Expansionsventil 6 gelangt das Kältemittel in den nachfolgenden Verdampfer 2, wo es unter Wärmeaufnahme verdampft und überhitzt. Ein innerer Wärmetauscher 7 ist zur Prozessverbesserung eingefügt. Der zu entfeuchtenden Luft wird, bevor sie in den Verdampfer 2 geleitet wird, mittels eines Luft-Luft-Wärmetauschers 8 ein Teil ihrer Feuchtigkeit entzogen. Zur Abführung des Kondenswassers sind sowohl der Verdampfer 2 als auch der Luft-Luft-Wärmetauscher 8 mit einem Kondensatabscheider 9 versehen.

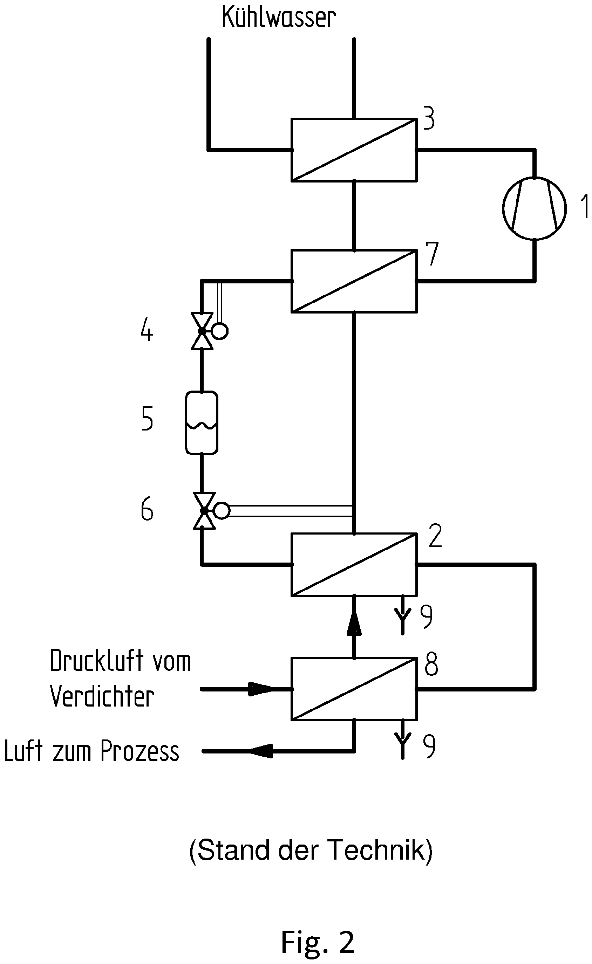

Bei dem in Fig. 2 beschriebenen Kältetrockner mit Kohlendioxid als Kältemittel und wenig veränderlichen Betriebszuständen muss im Vergleich zu dem Trockner nach Fig. 1 bei hochdruckseitig überkritischem Betrieb zusätzlich noch der Hochdruck geregelt werden. Dazu dient das Regelventil 4.

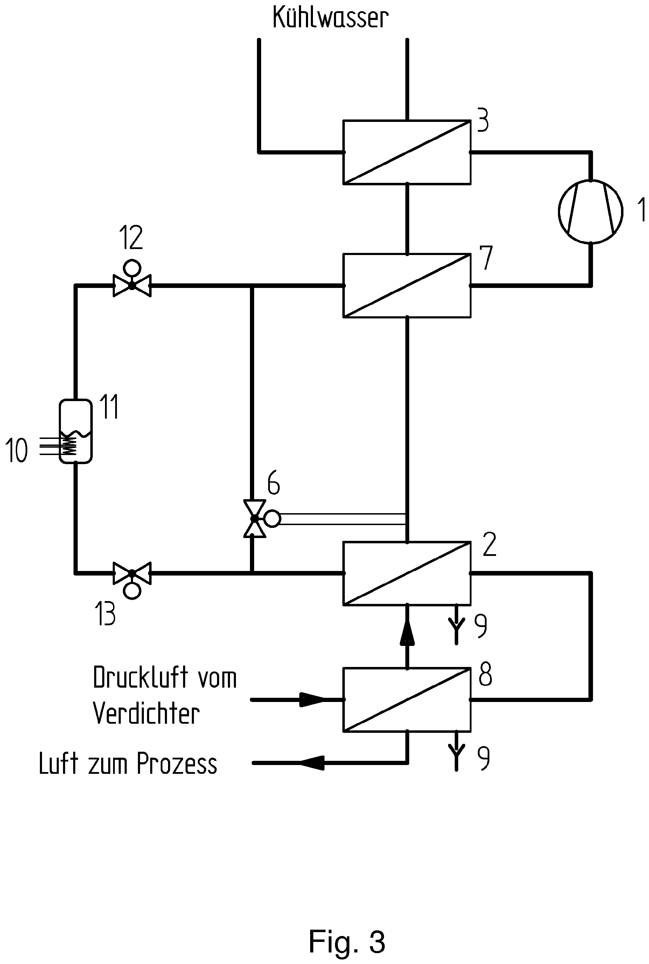

Beim für variable Betriebsbedingungen geeigneten Trockner nach Fig. 3 entfällt der ständig durchströmte Kältemittelsammler 5. Stattdessen wird ein mit einer Heiz-Kühleinheit 10 temperierbarer Kältemittelsammler 11 dem Expansionsventil 6 parallel geschaltet. Vor dem Eintritt des Kältemittelsammlers 11 ist ein erstes Regelventil 12 und hinter dem Austritt ein zweites Regelventil 13 installiert, mit denen die Kältemittelfüllung im Kreislauf so geregelt wird, dass sich der optimale Hochdruck im Trockner einstellt. Zur Prozessverbesserung können Ejektoren eingesetzt werden.

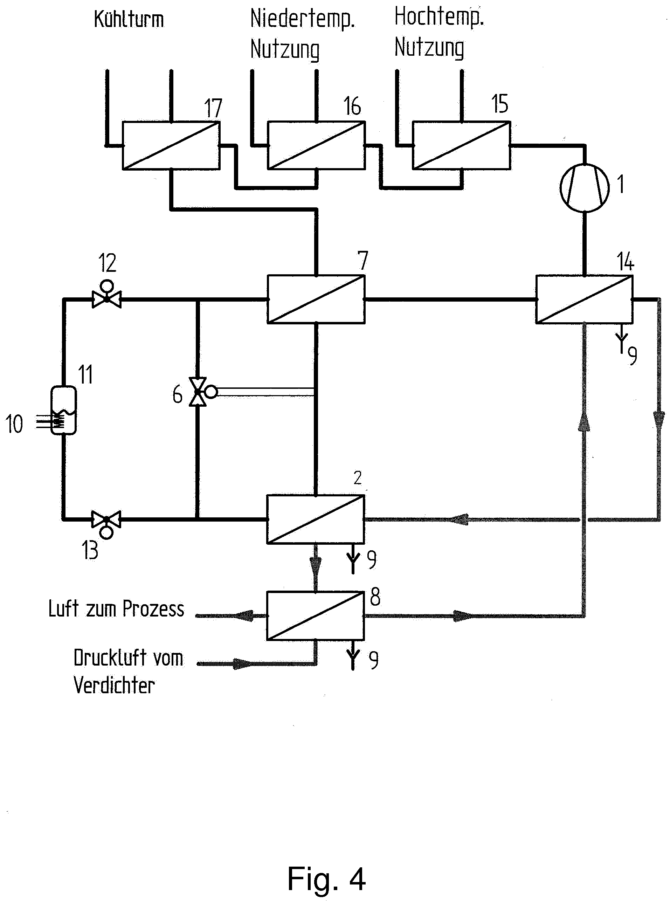

Fig. 4 zeigt einen Kältetrockner, der grundsätzlich analog wie der Kältetrockner nach Fig. 3 aufgebaut ist, jedoch mit dem Unterschied, dass er erstens zur weiteren Prozessverbesserung mit einem Luft-Kältemittel-Wärmetauscher 14 versehen ist, der luftseitig zwischen den Luft-Luft-Wärmetauscher 8 und den Verdampfer 2 geschaltet ist (alternativ kann die Reihenfolge der luftseitigen Reihenschaltung getauscht oder Wasser als Wärmequelle verwendet werden), und dass zweitens der Gaskühler 3 durch eine kältemittelseitige Serienschaltung aus einem Wärmetauscher zur Hochtemperaturnutzung 15, einem Wärmetauscher zur Niedertemperaturnutzung 16 und einem z. B. mit einem Kühlturm zu verbindenden Wärmeübertrager 17, der zur Abführung der nicht mehr nutzbaren Wärme (zu tiefes Temperaturniveau) dient, ersetzt wurde.

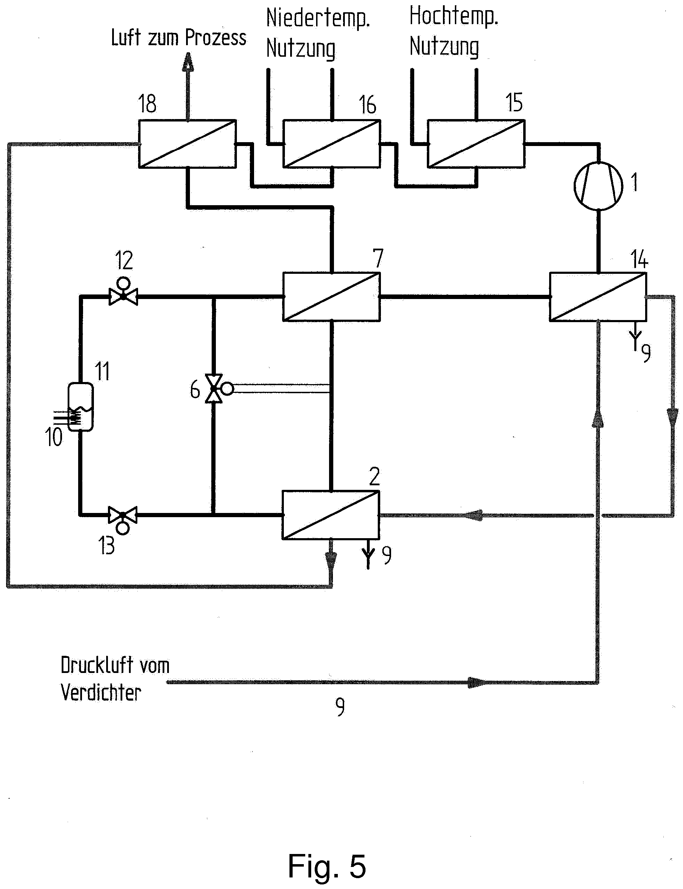

Der in Fig. 5 dargestellte Kältetrockner unterscheidet sich von den vorhergehenden Kältetrocknern (Fig. 1 bis 4) dadurch, dass der Luft-Luft-Wärmetauscher 8 entfällt. Damit ist es möglich, die gesamte der zu trocknenden Luft entzogene Energie auf ein hohes, nutzbares Temperaturniveau zu heben. Die Nachwärmung der getrockneten Luft findet hier im Luft-CO₂-Wärmetauscher 18 statt.

### Liste der verwendeten Bezugszeichen

- 1: Verdichter
- 2: Verdampfer
- 3: Gaskühler
- 4: Hochdruckregelventil
- 5: Kältemittelsammler

- 6: Expansionsventil
- 7: Innerer Wärmetauscher
- 8: Luft-Luft-Wärmetauscher
- 9: Kondensatabscheider
- 10: Heiz-Kühleinheit
- 11: Temperierbarer Kältemittelsammler
- 12: Erstes Regelventil
- 13: Zweites Regelventil
- 14: Luft-Kältemittel-Wärmetauscher
- 15: Wärmetauscher zur Hochtemperaturnutzung
- 16: Wärmetauscher zur Niedertemperaturnutzung
- 17: Kühlturm
- 18: Luft-CO₂-Wärmetauscher zur Luftnachheizung

## Patentansprüche

1. Kältetrockner zum Entfeuchten von Luft mittels eines Kältemittelkreislaufs mit Kohlendioxid als Kältemittel aufweisend einen Verdichter (1); einen Gaskühler (3); einen Verdampfer (2); der dazu eingerichtet ist, an seiner kalten Oberfläche sekundärseitig vorbeigeführte Luft zu entfeuchten, einen Kältemittelsammler (11) mit mindestens einem Eintritt und einem Austritt, und ein Entspannungsorgan (6) in Form eines Expansionsventils oder eines Ejektors, wobei dem Verdampfer (2) an dessen luftseitigem Austritt ein Luft-Luft-Wärmetauscher (8), dessen Austritt des mit der zu entfeuchtenden Luft durchströmten Teils an den luftseitigen Eintritt des Verdampfers (2) angeschlossen ist, oder ein Luft-CO₂-Wärmetauscher (18), der kältemittelseitig dem Gaskühler (3) nachgeschaltet ist, zum Erwärmen der getrockneten Luft nachgeschaltet ist, **dadurch gekennzeichnet, dass** der Kältemittelsammler (11) parallel zum Entspannungsorgan (6) geschaltet ist, wobei zwischen Abzweigung zum Entspannungsorgan (6) und dem Eintritt des Kältemittelsammlers (11) ein erstes Regel- oder schaltendes Magnetventil (12), und zwischen dem Austritt des Kältemittelsammlers (11) und Einmündung vom Entspannungsorgan (6) ein zweites Regel- oder schaltendes Magnetventil (13) installiert sind, mittels derer der Zufluss von Kältemittel in den Kältemittelsammler (11) und der Abfluss von Kältemittel aus dem Kältemittelsammler (11) jeweils in Abhängigkeit vom Druck des Kältemittels auf der Hochdruckseite und/oder der Kühlwassertemperatur regelbar sind.

2. Kältetrockner nach Anspruch 1, **dadurch gekennzeichnet, dass** der Kältemittelsammler (11) mit einer Einrichtung (10) ausgestattet ist, die zur Kühlung und/oder Erwärmung des Kältemittels im Kältemittelsammler (11) dient.

3. Kältetrockner nach einem der Ansprüche 1 bis 2, **dadurch gekennzeichnet, dass** er einen inneren Wärmetauscher (7) aufweist, der zur Wärmeübertragung zwischen dem Kältemittel an der Saugseite des Verdichters (1) und dem Kältemittel vor dem Eintritt des Expansionsventils (6) dient.

4. Kältetrockner nach Anspruch 3, **dadurch gekennzeichnet, dass** er einen dem Verdampfer (2) an dessen luftseitigem Austritt nachgeschalteten Luft-CO₂-Wärmetauscher (18) sowie einen Luft-Kältemittel-Wärmetauscher (14) aufweist, dessen luftseitigen Eintritt direkt an eine Zuleitung der zu trocknenden Luft angeschlossen ist und dessen luftseitiger Austritt mit dem luftseitigen Eintritt des Verdampfers (2) verbunden ist, wobei der Luft-Kältemittel-Wärmetauscher (14) kältemittelseitig zwischen den Austritt des inneren Wärmetauschers (7) und die Saugseite des Verdichters (1) geschaltet ist.

5. Kältetrockner nach Anspruch 3, **dadurch gekennzeichnet, dass** er einen dem Verdampfer (2) an dessen luftseitigem Austritt nachgeschalteten Luft-Luft-Wärmetauscher (8) sowie einen Luft-Kältemittel-Wärmetauscher (14) aufweist, dessen luftseitiger Eintritt an den Austritt des mit der zu trocknenden Luft durchströmten Teils des Luft-Luft-Wärmetauschers (8) angeschlossen ist und dessen luftseitiger Austritt mit dem luftseitigen Eintritt des Verdampfers (2) verbunden ist, wobei der Luft-Kältemittel-Wärmetauscher (14) kältemittelseitig zwischen den Austritt des inneren Wärmetauschers (7) und die Saugseite des Verdichters (1) geschaltet ist.

6. Kältetrockner nach einem der Ansprüche 3 bis 5, **dadurch gekennzeichnet, dass** er einen Wasser-Kältemittel-Wärmetauscher aufweist, der kältemittelseitig zwischen den Austritt des inneren Wärmetauschers (7) und die Saugseite des Verdichters (1) geschaltet ist und der wasserseitig mit von extern zugeleitetem Warmwasser, das mithilfe einer Wärmequelle erwärmt wurde, durchströmbar ist.

7. Kältetrockner nach einem der Ansprüche 1 bis 6, **dadurch gekennzeichnet, dass** der Gaskühler (3) mehrere in Reihe geschaltete Wärmetauscher (15, 16, 17) umfasst, wobei mit mindestens einem der Wärmetauscher (15, 16, 17) bei hochdruckseitig transkritischer Prozessführung vollständig oder teilweise Prozesswärme ausgekoppelt werden kann.

8. Kältetrockner nach einem der Ansprüche 1 bis 7, **dadurch gekennzeichnet, dass** er mit internen Überströmventilen ausgestattet ist, wobei die Speicherkapazität des Kältemittelsammlers (5, 11) und die Füllmenge des Kohlendioxids im Kältemittelkreislauf derart gewählt sind, dass der Stillstandsdruck der Anlage, bis zu den für den Aufstellraum des Kältetrockners zugelassenen maximalen Temperaturen, unter vollständiger Ausnutzung des inneren Volumens des Kältetrockners, unter dem jeweiligen Auslegungsdruck der Hoch- und der Niederdruckseite einhaltbar ist.

## Claims

1. A refrigeration dryer for dehumidifying air by means of a refrigerant circuit containing carbon dioxide as refrigerant, comprising a compressor (1), a gas cooler (3), an evaporator (2), which is designed to dehumidify air guided past its cold surface on a secondary side, a refrigerant collector (11) having at least one inlet and one outlet, and a pressure-reducing member (6) in the form of an expansion valve or an ejector, wherein an air-air heat exchanger (8), of which the outlet of the part through which the air to be dehumidified passes is connected to the air-side inlet of the evaporator (2), or an air-CO₂ heat exchanger (18), which on the refrigerant side is arranged downstream of the gas cooler (3), is arranged downstream of the evaporator (2) at the air-side outlet thereof, for heating the dried air, **characterised in that**
- the refrigerant collector (11) is arranged parallel to the pressure-reducing (6), wherein a first control valve or switching solenoid valve (12) is installed between a branching to the pressure-reducing (6) and the inlet of the refrigerant collector (11), and a second control valve or switching solenoid valve (13) is installed between the outlet of the refrigerant collector (11) and mouth of the pressure-reducing (6), by means of which valves the inflow of refrigerant into the refrigerant collector (11) and the outflow of refrigerant from the refrigerant collector (11) can be controlled, in each case depending on the pressure of the refrigerant on the high-pressure side and/or the cooling water temperature.

2. The refrigeration dryer according to claim 1, **characterised in that** the refrigerant collector (11) is provided with a device (10) which serves to cool and/or heat the refrigerant in the refrigerant collector (11).

3. The refrigeration dryer according to any one of claims 1 to 2, **characterised in that** it has an inner heat exchanger (7), which serves to transfer heat between the refrigerant on the intake side of the compressor (1) and the refrigerant before the inlet of the expansion valve (6).

4. The refrigeration dryer according to claim 3, **characterised in that** it has an air-CO₂ heat exchanger (18) arranged downstream of the evaporator (2) at the air-side outlet thereof and also has an air-refrigerant heat exchanger (14), of which the air-side inlet is directly connected to a feed line of the air to be dried and of which the air-side outlet is connected to the air-side inlet of the evaporator (2), wherein the air-refrigerant heat exchanger (14) is arranged on the refrigerant side between the outlet of the inner heat exchanger (7) and the intake side of the compressor (1).

5. The refrigeration dryer according to claim 3, **characterised in that** it has an air-air heat exchanger (8) arranged downstream of the evaporator (2) at the air-side outlet thereof and also has an air-refrigerant heat exchanger (14), of which the air-side inlet is connected to the outlet of the part of the air-air heat exchanger (8) through which the air to be dried passes, and of which the air-side outlet is connected to the air-side inlet of the evaporator (2), wherein the air-refrigerant heat exchanger (14) is arranged on the refrigerant side between the outlet of the inner heat exchanger (7) and the intake side of the compressor (1).

6. The refrigeration drier according to any one of claims 3 to 5, **characterised in that** it has a water-refrigerant heat exchanger, which is arranged on the refrigerant side between the outlet of the inner heat exchanger (7) and the intake side of the compressor (1), and through which hot water fed from outside can flow on the water side, said hot water having been heated with the aid of a heat source.

7. The refrigerant dryer according to any one of claims 1 to 6, **characterised in that** the gas cooler (3) comprises a plurality of heat exchangers (15, 16, 17) connected in series, wherein process heat can be removed wholly or partially by means of at least one of the heat exchangers (15, 16, 17) with high-pressure-side transcritical process control.

8. The refrigeration dryer according to any one of claims 1 to 7, **characterised in that** it is provided with internal overflow valves, wherein the storage capacity of the refrigerant collector (5, 11) and the filling quantity of carbon dioxide in the refrigerant circuit are selected such that the resting pressure of the system can be kept under the design pressures of the high- and low-pressure side, up to the maximum temperatures permissible for the installation space of the refrigeration dryer and with complete utilisation of the inner volume of the refrigeration dryer.

## Revendications

1. Dispositif de séchage à froid pour la déshumidification de l'air au moyen d'un circuit de réfrigérant avec du dioxyde de carbone en tant que réfrigérant, présentant un compresseur (1); un refroidisseur de gaz (3); un évaporateur (2), qui est conçu pour déshumidifier de l'air amené par le côté secondaire sur sa surface froide, un collecteur de réfrigérant (11) avec au moins une entrée et une sortie, et un système de détente (6) sous la forme d'une soupape d'expansion ou d'un éjecteur, où un échangeur de chaleur air-air (8), dont la sortie du côté air est raccordée avec la partie traversée par l'air à déshumidifier à l'entrée du côté air de l'évaporateur (2), ou un échangeur de chaleur air-CO₂ (18), qui est branché du côté réfrigérant après le refroidisseur de gaz (3), est branché après l'évaporateur (2) au niveau de sa sortie du côté air pour le chauffage de l'air séché, **caractérisé en ce que**
- le collecteur de réfrigérant (11) est branché parallèlement par rapport au système de détente (6), où, entre l'embranchement vers le système de détente (6) et l'entrée du collecteur de réfrigérant (11), est installée une première électrovanne de réglage ou de commutation (12), et une deuxième électrovanne de réglage ou de commutation est installée entre la sortie du collecteur de réfrigérant (11) et l'embouchure du système de détente (6), au moyen desquelles l'arrivée de réfrigérant dans le collecteur de réfrigérant (11) et l'écoulement de réfrigérant à partir du collecteur de réfrigérant (11) peuvent être respectivement réglés en fonction de la pression du réfrigérant sur le côté de pression élevée et/ou de la température du réfrigérant.

2. Dispositif de séchage à froid selon la revendication 1, **caractérisé en ce que** le collecteur de réfrigérant (11) est équipé d'un dispositif (10) qui sert au refroidissement et/ou au chauffage du réfrigérant dans le collecteur de réfrigérant (11).

3. Dispositif de séchage à froid selon l'une des revendications 1 à 2, **caractérisé en ce qu'**il présente un échangeur de chaleur interne (7) qui sert au transfert de chaleur entre le réfrigérant sur le côté de l'aspiration du compresseur (1) et le réfrigérant avant l'entrée dans la soupape d'expansion (6).

4. Dispositif de séchage à froid selon la revendication 3, **caractérisé en ce qu'**il présente un échangeur de chaleur air-CO₂ (18) branché après la sortie du côté air de l'évaporateur (2) ainsi qu'un échangeur de chaleur air-réfrigérant (14), dont l'entrée du côté air est directement raccordée à une conduite d'amenée de l'air à sécher et dont la sortie du côté air est reliée avec l'entrée du côté air de l'évaporateur (2), où l'échangeur de chaleur air-réfrigérant (14) est branché du côté réfrigérant entre la sortie de l'échangeur de chaleur interne (7) et le côté de l'aspiration du compresseur (1).

5. Dispositif de séchage à froid selon la revendication 3, **caractérisé en ce qu'**il présente un échangeur de chaleur air-air (8) branché après l'évaporateur (2) sur sa sortie du côté air, ainsi qu'un échangeur de chaleur air-réfrigérant (14) dont l'entrée du côté air est raccordée à la sortie de la partie de l'échangeur de chaleur air-air (8) traversé par l'air à sécher et dont la sortie du côté air est reliée avec l'entrée du côté air de l'évaporateur (2), où l'échangeur de chaleur air-réfrigérant (14) est branché du côté réfrigérant entre la sortie de l'échangeur de chaleur interne (7) et le côté de l'aspiration du compresseur (1).

6. Dispositif de séchage à froid selon l'une des revendications 3 à 5, **caractérisé en ce qu'**il présente un échangeur de chaleur eau-réfrigérant, qui est branché du côté réfrigérant entre la sortie de l'échangeur de chaleur interne (7) et le côté de l'aspiration du compresseur (1) et qui peut être traversé du côté de l'eau avec de l'eau chaude alimentée par l'extérieur qui a été réchauffée à l'aide d'une source de chaleur.

7. Dispositif de séchage à froid selon l'une des revendications 1 à 6, **caractérisé en ce que** le refroidisseur de gaz (3) comprend plusieurs échangeurs de chaleur (15, 16, 17) branchés en série, où la chaleur de procédé peut être récupérée totalement ou partiellement du côté des pressions élevées par un couplage avec au moins un des échangeurs de chaleur (15, 16, 17) lors d'un contrôle de procédé transcritique.

8. Dispositif de séchage à froid selon l'une des revendications 1 à 7, **caractérisé en ce qu'**il est équipé avec des soupapes de décharge internes, où la capacité de stockage du collecteur de réfrigérant (5, 11) et le remplissage du dioxyde de carbone dans le circuit de réfrigérant sont choisis de telle manière que la pression d'arrêt à l'équilibre de l'installation peut être conservée jusqu'aux températures maximales permises pour le domaine d'établissement du dispositif de séchage à froid , moyennant l'utilisation complète du volume intérieur du d dispositif de séchage à froid, sous la pression de conception respective du côté des pressions élevées et du côté des basses pressions.
